# EUROPEAN PATENT APPLICATION

(11) **EP 4 621 999 A1**
(43) Date of publication of application: **24.09.2025**
(21) Application number: 23896444.9
(22) Date of filing: 02.11.2023
(51) Int. Cl.: H01Q 3/04

(54) **ROTATING ASSEMBLY AND ELECTRONIC DEVICE**

(30) Priority: 30.11.2022 CN 202211525181
(71) Applicant: Huawei Technologies Co., Ltd., Shenzhen, Guangdong 518129 (CN)
(72) Inventor: YU, Bin, Shenzhen, Guangdong 518129 (CN); CHEN, Zefeng, Shenzhen, Guangdong 518129 (CN); YIN, Jixiong, Shenzhen, Guangdong 518129 (CN); FU, Haibo, Shenzhen, Guangdong 518129 (CN); ZHAO, Chunyu, Shenzhen, Guangdong 518129 (CN); YANG, Tang, Shenzhen, Guangdong 518129 (CN); XU, Gang, Shenzhen, Guangdong 518129 (CN)
(74) Representative: Maiwald GmbH
(86) International application number: PCT/CN2023/129417
(87) International publication number: WO 2024/114290

(57) **Abstract**

This application relates to the field of electronic device technologies, and provides a rotating assembly and an electronic device, to resolve a problem that a current rotating assembly has a complex structure and low reliability. The rotating assembly provided in this application includes a first rotation mechanism, a second rotation mechanism, and a moving platform. The first rotation mechanism includes a first rotating member and a first driven member, and the first driven member is rotatably connected to the first rotating member, and is fixedly connected to the moving platform. The first rotating member may rotate around a first axis, the first driven member may rotate around a second axis, and the first axis is perpendicular to the second axis. The second rotation mechanism includes a second rotating member and a second driven member, and the second driven member is rotatably connected to the second rotating member, and is fixedly connected to the moving platform. The second rotating member may rotate around a third axis, the second driven member may rotate around a fourth axis, the third axis is perpendicular to the fourth axis, and the third axis is perpendicular to the first axis. The rotation mechanism provided in this application may implement multidimensional rotation, and is featured by a simple structure and high reliability.

## Description

### CROSS-REFERENCE TO RELATED APPLICATIONS

This application claims priority to Chinese Patent Application No. 202211525181.0, filed with the China National Intellectual Property Administration on November 30, 2022 and entitled "ROTATING ASSEMBLY AND ELECTRONIC DEVICE", which is incorporated herein by reference in its entirety.

### TECHNICAL FIELD

This application relates to the field of electronic device technologies, and in particular, to a rotating assembly and an electronic device.

### BACKGROUND

In the field of microwave communication, with application and widespread adoption of an E-band frequency band, some problems gradually become apparent. The E-band frequency band refers to microwave in a frequency band with a frequency range from 71 GHz to 86 GHz, and is featured by a high frequency and a narrow beam. This helps reduce interference between sites, and can implement dense site deployment. However, because the beam is narrow (for example, a half-power beam angle is less than 0.8°), in an actual use process, after an antenna shakes slightly or has a position offset, a propagation direction of the beam changes, resulting in propagation link interruption.

To resolve this problem, a rotating assembly may be arranged to adjust a spatial attitude of the antenna, so as to control the propagation direction of the beam. However, a current rotating assembly has a complex structure, and has problems of high costs and low reliability.

### SUMMARY

This application provides a rotating assembly with a simple structure and high reliability and an electronic device.

According to a first aspect, this application provides a rotating assembly, which may include a first rotation mechanism, a second rotation mechanism, and a moving platform. The first rotation mechanism includes a first rotating member and a first driven member, one end of the first driven member is rotatably connected to the first rotating member, and the other end is fixedly connected to the moving platform. The first rotating member may rotate around a first axis, the first driven member may rotate around a second axis, and the first axis is perpendicular to the second axis. The second rotation mechanism includes a second rotating member and a second driven member, one end of the second driven member is rotatably connected to the second rotating member, and the other end is fixedly connected to the moving platform. The second rotating member may rotate around a third axis, the second driven member may rotate around a fourth axis, the third axis is perpendicular to the fourth axis, and the third axis is perpendicular to the first axis. The second driven member and the moving platform may further rotate around a fifth axis, and the fifth axis is perpendicular to both the third axis and the fourth axis. In the rotating assembly provided in this application, the first rotating member, the first driven member, the second rotating member, and the second driven member may be used to implement a multidimensional rotation function. In addition, the rotating assembly uses a small quantity of components, has advantages of a simple structure and easy manufacturing, and has high rotation reliability due to the multidimensional rotation function.

In an example, the first rotation mechanism may further include a first bearing assembly. The first rotating member and the first driven member may be rotatably connected through the first bearing assembly. A rotation center of the first bearing assembly coincides with the second axis. In the example provided in this application, a mature bearing structure is used to implement a rotatable connection between the first rotating member and the first driven member, thereby achieving good reliability.

During specific arrangement, the first rotating member has a first axle hole, and a bearing in the first bearing assembly is fastened in the first axle hole, so that the rotatable connection between the first rotating member and the first driven member is implemented.

In addition, the second rotation mechanism may further include a second bearing assembly and a third bearing assembly. The second rotating member and the second driven member may be rotatably connected through the second bearing assembly and the third bearing assembly. In the example provided in this application, a mature bearing structure is used to implement a rotatable connection between the second rotating member and the second driven member, thereby achieving good reliability.

In addition, during specific arrangement, the second bearing assembly and the third bearing assembly may be arranged in a perpendicularly crossed manner, so that relative rotation in more dimensions can be implemented between the second rotating member and the second driven member.

In an example, the second driven member has a second axle hole, and a bearing in the second bearing assembly is fastened in the second axle hole. In addition, the second rotating member has a third axle hole, and a bearing in the third bearing assembly is fastened in the third axle hole. In this way, a rotatable connection between the second driving member and the second driven member can be implemented.

In an example, the second bearing assembly may include a first central axle, and the third bearing assembly includes a second central axle. The first central axle has a through hole, and an axis of the through hole is perpendicular to an axis of the first central axle. The second central axle penetrates the through hole. In this way, the second bearing assembly and the third bearing assembly can be arranged in a perpendicularly crossed manner. In addition, this also helps ensure precision of relative positions of the second bearing assembly and the third bearing assembly and a quantity of used components.

In an example, the rotating assembly may further include a first motor, an output axle of the first motor is fixedly connected to the first rotating member, and an axis of the output axle of the first motor coincides with the first axis, so that automatic control of the rotating assembly is implemented.

In an example, the rotating assembly may further include a second motor, an output axle of the second motor is fixedly connected to the second rotating member, and an axis of the output axle of the second motor coincides with the second axis, so that automatic control of the rotating assembly is implemented.

According to a second aspect, this application further provides an electronic device, which may include an attitude sensor, a controller, a first motor, a second motor, and any one of the foregoing rotating assembly. The first motor is configured to drive the first rotating member to rotate around the first axis, and the second motor is configured to drive the second rotating member to rotate around the second axis. The attitude sensor is configured to detect an attitude of the moving platform in space. The controller is connected to the attitude sensor, the first motor, and the second motor, and is configured to control angles of rotation of the first motor and the second motor based on a detection result of the attitude sensor. In this way, automatic control on the moving platform can be implemented, thereby helping improve control precision and increase a response speed.

In an example, the electronic device may be specifically a reflector antenna. The reflector antenna may include a primary reflector and a secondary reflector. The moving platform of the rotating assembly may be fixedly connected to the secondary reflector. Because the electronic device has the rotating assembly proposed in the foregoing first aspect, based on technical effects of the rotating assembly described above, the rotating assembly may adjust a spatial attitude of the secondary reflector, to change a beam direction of the entire reflector antenna, so that a beam sweeping function of the electronic device can be implemented.

### BRIEF DESCRIPTION OF DRAWINGS

FIG. 1 is a diagram of an application scenario of a rotating assembly according to an embodiment of this application;
FIG. 2 is a diagram of a three-dimensional structure of a rotating assembly according to an embodiment of this application;
FIG. 3 is a schematic exploded view of a structure of a rotating assembly according to an embodiment of this application;
FIG. 4 is a spatial coordinate diagram representing a motion range of a moving platform according to an embodiment of this application;
FIG. 5 is a plane coordinate diagram representing a motion range of a moving platform according to an embodiment of this application;
FIG. 6 is another plane coordinate diagram representing a motion range of a moving platform according to an embodiment of this application;
FIG. 7 is another plane coordinate diagram representing a motion range of a moving platform according to an embodiment of this application;
FIG. 8 is a schematic exploded view of a structure of a first rotation mechanism according to an embodiment of this application;
FIG. 9 is a schematic exploded view of a structure of a second rotation mechanism according to an embodiment of this application;
FIG. 10 is a diagram of a three-dimensional structure of another rotating assembly according to an embodiment of this application;
FIG. 11 is a schematic exploded view of a structure of another first rotation mechanism according to an embodiment of this application;
FIG. 12 is a schematic exploded view of a structure of another second rotation mechanism according to an embodiment of this application; and
FIG. 13 is a diagram of a structure of a reflector antenna according to an embodiment of this application.

### DESCRIPTION OF EMBODIMENTS

To make objectives, technical solutions, and advantages of this application clearer, the following further describes this application in detail with reference to accompanying drawings.

To facilitate understanding of a rotating assembly provided in embodiments of this application, an application scenario of the rotating assembly is first described below.

The rotating assembly provided in embodiments of this application may be used in an antenna, a radar, a camera, a pan-tilt-zoom, or a robotic arm, and is configured to implement a corresponding rotation function.

For example, in the antenna, a spatial attitude of the antenna may be adjusted through the rotating assembly.

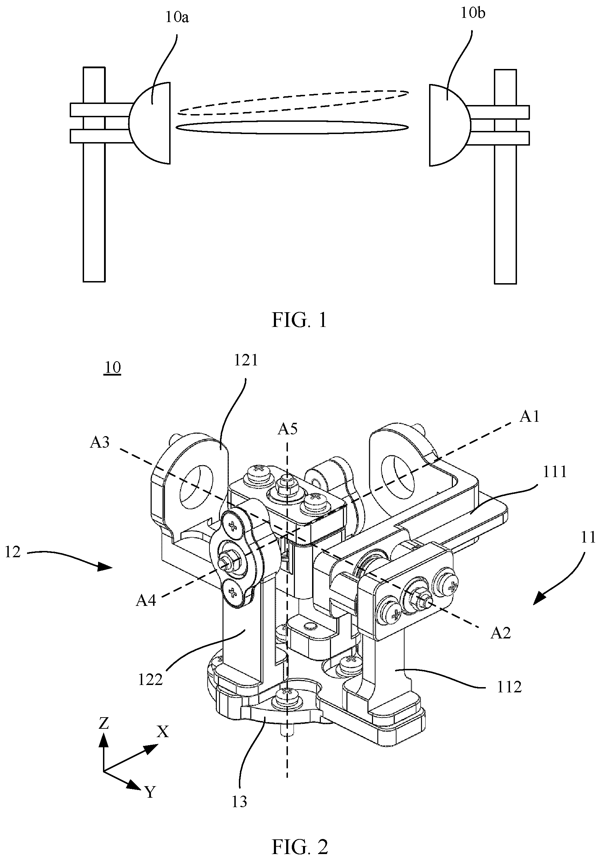

As shown in FIG. 1, a microwave communication scenario may include a plurality of reflector antennas, and the plurality of reflector antennas may form a microwave communication link. The following uses two reflector antennas (in other words, a one-hop microwave communication link) as an example for description. An electromagnetic wave generated by a reflector antenna 10a is transmitted in a direction of a reflector antenna 10b, and the reflector antenna 10b may receive the electromagnetic wave transmitted by the reflector antenna 10a. Certainly, an electromagnetic wave generated by the reflector antenna 10b may be transmitted in a direction of the reflector antenna 10a, and the reflector antenna 10a may receive the electromagnetic wave transmitted by the reflector antenna 10b, so that communication between the two reflector antennas can be implemented. During actual application, three or more reflector antennas may form a transmission link, to implement long-distance communication.

For an antenna that uses an E-band frequency band, a frequency range of operation of the antenna is about 71 GHz to 86 GHz. Therefore, the antenna is featured by a high gain, a narrow beam, and the like. In the transmission link, after an antenna (for example, the reflector antenna 10a in FIG. 1) shakes slightly or has a position offset due to a strong wind, an earthquake, or the like, the antenna and the reflector antenna 10b adjacent to the antenna fail to be aligned, resulting in transmission link interruption.

Currently, some manufacturers adjust an attitude of the antenna through the rotating assembly, to prevent the transmission link interruption. However, in a current rotating assembly, a structure is complex, a quantity of used kinematic pairs is large, a requirement on machining precision and assembly precision of a component is high, and engineering implementability is poor. In addition, a spherical pair (for example, a ball head structure) and a prismatic pair (for example, a sliding rail structure) are usually used in the current rotating assembly, and there is a high reliability risk if maintenance is performed irregularly.

Therefore, embodiments of this application provide a rotating assembly with a simple structure and high reliability.

To make the objectives, technical solutions, and advantages of this application clearer, the following further describes this application in detail with reference to the accompanying drawings and specific embodiments.

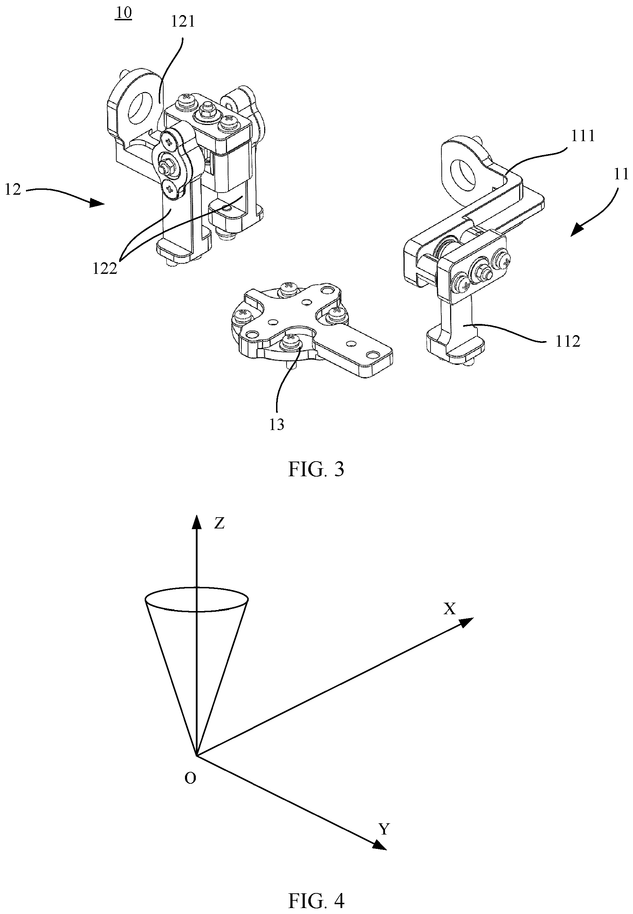

As shown in FIG. 2 and FIG. 3, in an example provided in this application, the rotating assembly 10 may include a first rotation mechanism 11, a second rotation mechanism 12, and a moving platform 13. The first rotation mechanism 11 includes a first rotating member 111 and a first driven member 112, one end of the first driven member 112 is rotatably connected to the first rotating member 111, and the other end is fixedly connected to the moving platform 13. The first rotating member 111 may rotate around a first axis A1, the first driven member 112 may rotate around a second axis A2, and the first axis A1 is perpendicular to the second axis A2. In other words, the first rotating member 111 may enable, through the first driven member 112, the moving platform 13 to rotate around the first axis A1.

The second rotation mechanism 12 includes a second rotating member 121 and a second driven member 122, one end of the second driven member 122 is rotatably connected to the second rotating member 121, and the other end is fixedly connected to the moving platform 13. The second rotating member 121 may rotate around a third axis A3, the second driven member 122 may rotate around a fourth axis A4, and the third axis A3 is perpendicular to the fourth axis A4. In other words, the second rotating member 121 may enable, through the second driven member 122, the moving platform 13 to rotate around the third axis A3.

In addition, because the first axis A1 is perpendicular to the third axis A3, in three-dimensional space, the moving platform 13 has two rotational degrees of freedom that are perpendicular to each other, so that an inclined attitude can be adjusted. In addition, the second driven member 122 and the moving platform 13 may further rotate around a fifth axis A5, and the fifth axis A5 is perpendicular to both the third axis A3 and the fourth axis A4. Therefore, decoupling between the first rotation mechanism 11 and the second rotation mechanism 12 can be implemented, and mutual impact between the first rotation mechanism 11 and the second rotation mechanism 12 can be avoided. For example, when the first rotating member 111 rotates around the first axis A1, the first driven member 112 may drive the moving platform 13 to rotate, to enable the moving platform 13 to rotate around the first axis A1. At the same time, the second rotating member 121 may be fastened, or the second rotating member 121 may still rotate around the third axis A3, and the second driven member 122 may drive the moving platform 13 to rotate, to enable the moving platform 13 to rotate around the third axis A3.

For ease of understanding, the following uses an example in which the first axis A1 is defined as an X axis, the third axis A3 is defined as a Y axis, and the fifth axis A5 is defined as a Z axis for description.

As shown in FIG. 4, a moving track of the moving platform 13 is a spherical cone.

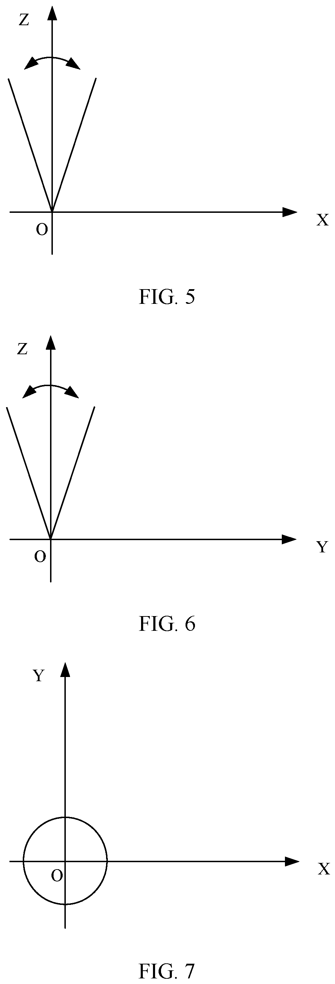

FIG. 5 to FIG. 7 show a case in which the moving track of the moving platform 13 is decomposed into three orthogonal planes.

Specifically, as shown in FIG. 5, in an X-O-Z plane, the moving platform 13 performs rotational motion around the Y axis. As shown in FIG. 6, in a Y-O-Z plane, the moving platform 13 performs rotational motion around the X axis. As shown in FIG. 7, in an X-O-Y plane, the moving platform 13 performs rotational motion around the Z axis. In other words, projection of the moving platform 13 on each plane is rotational motion.

Based on motion analysis, in the rotating assembly 10 provided in this application, the first rotation mechanism 11 and the second rotation mechanism 12 are used, so that the moving platform 13 can perform rotational motion around the X axis (the first axis A1) and the Y axis (the third axis A3), and perform rotational motion around the Z axis (the fifth axis A5) after the first rotation mechanism 11 rotates around the X axis and the second rotation mechanism 12 rotates around the Y axis at the same time. In addition, decoupling between the first rotation mechanism 11 and the second rotation mechanism 12 can be further implemented, and mutual impact between the first rotation mechanism 11 and the second rotation mechanism 12 can be avoided, thereby helping simplify angle control.

It should be noted that, in the example provided in this application, the first axis A1 and the third axis A3 are defined as fixed axes in space. When the first rotating member 111 drives the first driven member 112 to rotate around the first axis A1, the second axis A2 also rotates around the first axis A1. Therefore, the second axis A2 varies. In other words, the second axis A2 is not fixed in the space.

For example, in FIG. 2, in this case, the second axis A2 coincides with the third axis A3. When the first rotating member 111 drives the first driven member 112 to rotate around the first axis A1, an included angle between the second axis A2 and the third axis A3 gradually increases.

Correspondingly, when the second rotating member 121 drives the second driven member 122 to rotate around the third axis A3, the fourth axis A4 and the fifth axis A5 also rotate around the third axis A3. Therefore, the fourth axis A4 and the fifth axis A5 vary. In other words, the fourth axis A4 and the fifth axis A5 are not fixed in the space. For example, in FIG. 2, in this case, the fourth axis A4 coincides with the first axis A1. When the second rotating member 121 drives the second driven member 122 to rotate around the third axis A3, an included angle between the fourth axis A4 and the first axis A1 gradually increases.

In the rotating assembly 10 provided in this application, the first rotating member 111, the first driven member 112, the second rotating member 121, and the second driven member 122 may be used to implement a multidimensional rotation function. In addition, the rotating assembly uses a small quantity of components, and has advantages such as ease manufacturing and ease assembly.

In addition, in the example provided in this application, a mature bearing structure is used to implement a rotatable connection between the first rotating member 111 and the first driven member 112 and a rotatable connection between the second rotating member 121 and the second driven member 122, thereby achieving good reliability.

Specifically, the first rotation mechanism 11 includes a first bearing assembly 113, the first rotating member 111 and the first driven member 112 are rotatably connected through the first bearing assembly 113, and a rotation center of the first bearing assembly 113 coincides with the second axis A2.

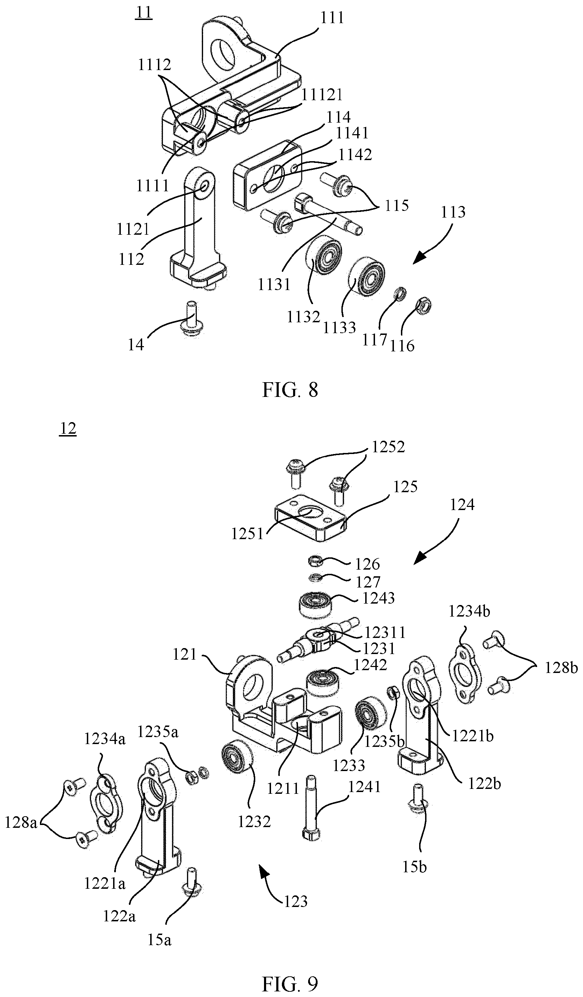

As shown in FIG. 8, the first bearing assembly 113 mainly includes a central axle 1131, a bearing 1132, and a bearing 1133. The first rotating member 111 has an axle hole 1111, and an end cover 114 has an axle hole 1141. An inner ring of the bearing 1132 and an inner ring of the bearing 1133 are sleeved on an outer periphery of the central axle 1131, an outer ring of the bearing 1132 is fastened in the axle hole 1111, and an outer ring of the bearing 1133 is fastened in the axle hole 1141. The inner ring of the bearing 1132 and the central axle 1131 may be assembled in a manner of interference fit or a manner of clearance fit, and the outer ring of the bearing 1132 and the axle hole 1111 may be assembled in the manner of interference fit. Correspondingly, the inner ring of the bearing 1133 and the central axle 1131 may be assembled in the manner of interference fit or the manner of clearance fit, and the outer ring of the bearing 1133 and the axle hole 1141 may be assembled in the manner of interference fit.

In addition, in the example provided in this application, the end cover 114 is fixedly connected to the first rotating member 111 through two screws 115.

Specifically, the first rotating member 111 has two cylinders 1112, and one end of each of the two cylinders 1112 has a threaded hole 11121. The end cover 114 has a through hole 1142. After the screw 115 penetrates the through hole 1142 and engages with the threaded hole 11121 in a threaded manner, the first rotating member 111 may be fixedly connected to the end cover 114.

During assembly, the bearing 1132 may be fastened in the axle hole 1111, the bearing 1133 may be fastened in the axle hole 1141, and then the first driven member 112 is arranged between the first rotating member 111 and the end cover 114, so that a through hole 1121 of the first driven member 112, the axle hole 1111, and the axle hole 1141 are coaxial. Then, the stud-shaped central axle 1131 penetrates the bearing 1132, the through hole 1121, and the bearing 1133, and finally a nut 116 engages with one end of the central axle 1131 in the threaded manner, to implement assembly between the first rotating member 111 and the first driven member 112.

A lock washer 117 is further arranged on one side of the nut 116, to improve connection stability between the nut 116 and the central axle 1131, and prevent the nut 116 from being detached from the central axle 1131.

In addition, as shown in FIG. 9, in the example provided in this application, the second rotation mechanism 12 includes a second bearing assembly 123 and a third bearing assembly 124, and the second bearing assembly 123 and the third bearing assembly 124 are arranged in a perpendicularly crossed manner. The second rotating member 121 and the second driven member 122 are rotatably connected through the second bearing assembly 123.

Specifically, the second bearing assembly 123 includes a first central axle 1231, a bearing 1232, and a bearing 1233. There are two second driven members 122, which are respectively marked as a second driven member 122a and a second driven member 122b for ease of differentiation. The second driven member 122a has an axle hole 1221a, and the second driven member 122b has an axle hole 1221b.

The second bearing assembly 123 includes the first central axle 1231, the bearing 1232, and the bearing 1233. An inner ring of the bearing 1232 and an inner ring of the bearing 1233 are sleeved on an outer periphery of the first central axle 1231, an outer ring of the bearing 1232 is fastened in the axle hole 1221a, and an outer ring of the bearing 1233 is fastened in the axle hole 1221b. The inner ring of the bearing 1232 and the first central axle 1231 may be assembled in the manner of interference fit or the manner of clearance fit, and the outer ring of the bearing 1232 and the axle hole 1221a may be assembled in the manner of interference fit. Correspondingly, the inner ring of the bearing 1233 and the first central axle 1231 may be assembled in the manner of interference fit or the manner of clearance fit, and the outer ring of the bearing 1233 and the axle hole 1221b may be assembled in the manner of interference fit.

The third bearing assembly 124 includes a second central axle 1241, a bearing 1242, and a bearing 1243. The second rotating member 121 has an axle hole 1211, and an end cover 125 has an axle hole 1251. An inner ring of the bearing 1242 and an inner ring of the bearing 1243 are sleeved on an outer periphery of the second central axle 1241, an outer ring of the bearing 1242 is fastened in the axle hole 1211, and an outer ring of the bearing 1243 is fastened in the axle hole 1251. The inner ring of the bearing 1242 and the second central axle 1241 may be assembled in the manner of interference fit or the manner of clearance fit, and the outer ring of the bearing 1242 and the axle hole 1211 may be assembled in the manner of interference fit. Correspondingly, the inner ring of the bearing 1243 and the second central axle 1241 may be assembled in the manner of interference fit or the manner of clearance fit, and the outer ring of the bearing 1243 and the axle hole 1251 may be assembled in the manner of interference fit.

In addition, the first central axle 1231 has a through hole 12311, an axis of the through hole 12311 is perpendicular to an axis of the first central axle 1231, and the second central axle penetrates the through hole 12311.

During assembly, the bearing 1243 may be fastened in the axle hole 1251, the bearing 1242 may be fastened in the axle hole 1211, and then the first central axle 1231 is arranged between the second rotating member 121 and the end cover 125, so that the through hole 12311 of the first central axle 1231, the axle hole 1251, and the axle hole 1211 are coaxial. Then, the stud-shaped second central axle 1241 penetrates the bearing 1242, the through hole 12311, and the bearing 1243, then a nut 126 engages with one end of the second central axle 1241 in the threaded manner, and the end cover 125 is fixedly connected to the second rotating member 121 through a screw 1252, to implement assembly between the first central axle 1231, the second central axle 1241, and the second rotating member 121.

A lock washer 127 is further arranged on one side of the nut 126, to improve connection stability between the nut 126 and the second central axle 1241, and prevent the nut 126 from being detached from the second central axle 1241.

In addition, when the assembly continues, the bearing 1232 may be fastened in the axle hole 1221a, and then an end cover 1234a and the second driven member 122 are fixedly connected through a screw 128a, to better fasten the bearing 1232 in the axle hole 1221a. The bearing 1233 is fastened in the axle hole 1221b, and then an end cover 1234b and the second driven member 122 are fixedly connected through a screw 128b, to better fasten the bearing 1233 in the axle hole 1221b.

Then, the bearing 1232 is sleeved on the outer periphery of the first central axle 1231 through one end (for example, a left end in FIG. 9) of the first central axle 1231, and a nut 1235a engages with one end of the first central axle 1231 in the threaded manner, to implement assembly between the second driven member 122 and the first central axle 1231. The bearing 1233 is sleeved on the outer periphery of the first central axle 1231 through the other end (for example, a right end in FIG. 9) of the first central axle 1231, and a nut 1235b engages with the other end of the first central axle 1231 in the threaded manner, to implement assembly between the second driven member 122 and the first central axle 1231.

Finally, the moving platform 13 is fixedly connected to the first driven member 112 through a screw 14, the moving platform 13 is fixedly connected to the second driven member 122a through a screw 15a, and the moving platform 13 is fixedly connected to the second driven member 122b through a screw 15b, to implement assembly of the entire rotating assembly 10.

It may be understood that, in another example, the first driven member 112 may alternatively be fixedly connected to the moving platform 13 through a rivet or through welding. In addition, the second driven member 122a and the second driven member 122b may alternatively be fixedly connected to the moving platform 13 through a rivet or through welding. This is not limited in this application.

In addition, in the example provided in this application, to ensure connection stability between the first rotating member 111 and the first driven member 112, two bearings are used for the rotatable connection. Certainly, in another example, the first rotating member 111 and the first driven member 112 may alternatively be rotatably connected through one bearing, and details are not described herein.

In addition, in the example provided in this application, to ensure stability and force-bearing strength of the second rotation mechanism 12, two second driven members 122 are used and are symmetrically arranged with the second rotating member 121. Certainly, in another example, one second driven member 122 may alternatively be used, and details are not described herein.

During actual application, rotating actions of the first rotating member 111 and the second rotating member 121 may be manually driven, or may be driven by a motor.

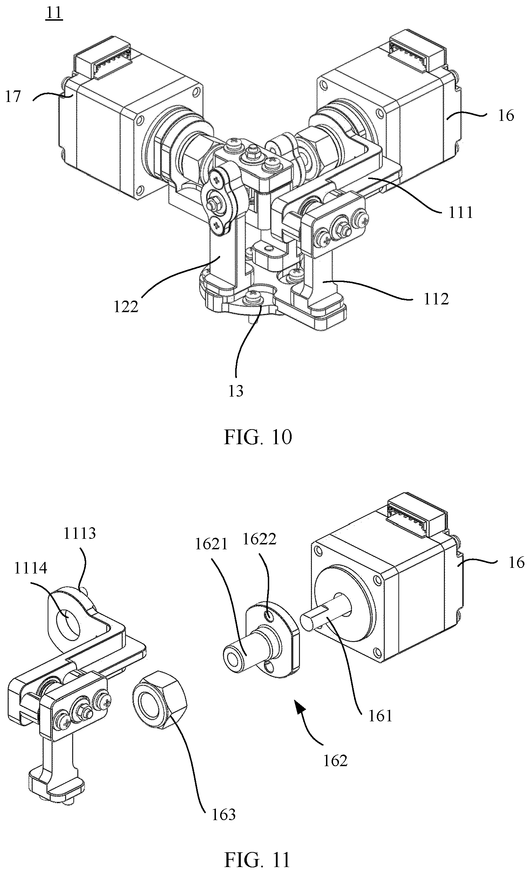

For example, as shown in FIG. 10, in an example provided in this application, the rotating assembly 10 further includes a first motor 16 and a second motor 17. An output axle 161 of the first motor 16 is fixedly connected to the first rotating member 111. In addition, an axis of the output axle 161 of the first motor 16 coincides with the first axis A1, and the first motor 16 is configured to drive the first rotating member 111 to rotate around the first axis A1.

An output axle 171 of the second motor 17 is fixedly connected to the second rotating member 121. In addition, an axis of the output axle 171 of the second motor 17 coincides with the third axis A3, and the second motor 17 is configured to drive the second rotating member 121 to rotate around the third axis A3.

Specifically, as shown in FIG. 11, the first motor 16 is connected to the first rotating member 111 through a coupling 162. The coupling 162 has a tubular portion 1621, and the output axle 161 is in interference fit with an inner wall of the tubular portion 1621. After the output axle 161 of the first motor 16 is inserted into the tubular portion 1621, the output axle 161 may be fixedly connected to the coupling 162, and the output axle 161 may drive the coupling 162 to rotate synchronously.

In addition, the coupling 162 has a locating hole 1622, the first rotating member 111 has a locating pillar 1113, and the locating pillar 1113 may be inserted into the locating hole 1622, so that the first rotating member 111 rotates synchronously with the coupling 162. The first rotating member 111 further has a through hole 1114, the tubular portion 1621 may penetrate the through hole 1114, and an outer peripheral surface of the tubular portion 1621 has an external thread. After a nut 163 engages with the tubular portion 1621 in the threaded manner, the coupling 162 may be fixedly connected to the first rotating member 111.

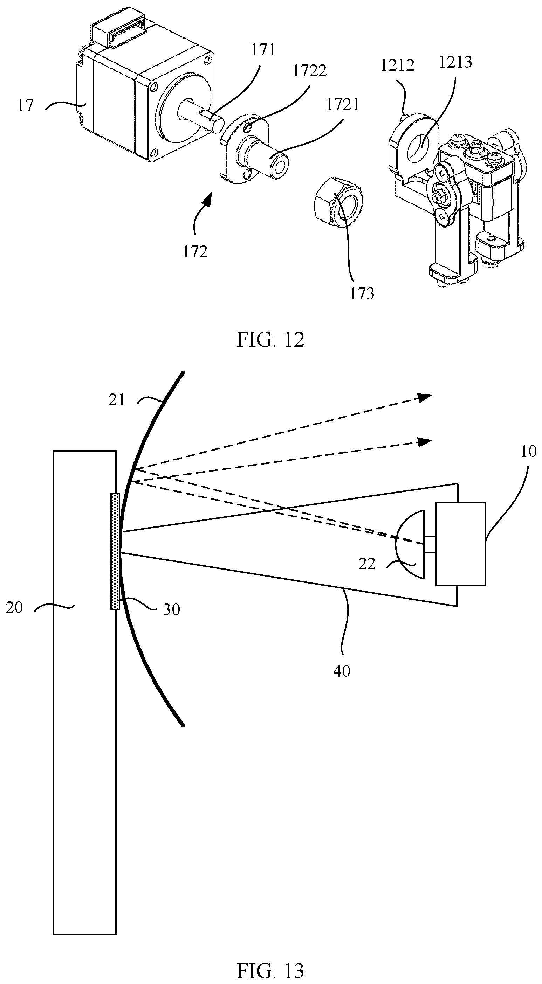

As shown in FIG. 12, the second motor 17 is connected to the second rotating member 121 through a coupling 172. The coupling 172 has a tubular portion 1721, and the output axle 171 is in interference fit with an inner wall of the tubular portion 1721. After the output axle 171 of the second motor 17 is inserted into the tubular portion 1721, the output axle 171 may be fixedly connected to the coupling 172, and the output axle 171 may drive the coupling 172 to rotate synchronously.

The coupling 172 has a locating hole 1722, the second rotating member 121 has a locating pillar 1212, and the locating pillar 1212 may be inserted into the locating hole 1722, so that the second rotating member 121 rotates synchronously with the coupling 172. The second rotating member 121 further has a through hole 1213, the tubular portion 1721 may penetrate the through hole 1213, and an outer peripheral surface of the tubular portion 1721 has an external thread. After a nut 173 engages with the tubular portion 1721 in the threaded manner, the coupling 172 may be fixedly connected to the second rotating member 121.

During actual application, a spatial attitude of the moving platform 13 may be properly adjusted by controlling angles of rotation of the first motor 16 and the second motor 17. The first motor 16 and the second motor 17 may be of a type such as a stepper motor. This is not limited in this application. In addition, the first motor 16 and the second motor 17 may further include an angle encoder and the like, configured to effectively detect angles of rotation of rotors in the first motor 16 and the second motor 17. During actual application, closed-loop control may be implemented by using a value of the encoder, thereby helping reduce control difficulty, and achieve good control precision.

The rotating assembly 10 may be used in a plurality of electronic devices of different types. For example, the electronic device may be an antenna, a radar, a camera, a pan-tilt-zoom, or a robotic arm.

In addition, the electronic device may include an attitude sensor and a controller. The attitude sensor may be fastened on the moving platform 13, and is configured to detect an attitude of the moving platform 13 in space. The controller is connected to the attitude sensor, the first motor 16, and the second motor 17, and is configured to control the angles of rotation of the first motor 16 and the second motor 17 based on a detection result of the attitude sensor, to adjust the attitude of the moving platform in the space.

Alternatively, in some examples, the attitude sensor may be installed at another position. For example, the first motor 16 and the second motor 17 may be fastened on a support, and the attitude sensor may be fastened on the support, and is configured to detect an attitude of the support in the space. After detecting an angle that the support deflects, the attitude sensor may transfer the detection result to the controller. The controller may control, based on the detection result, the first motor 16 and the second motor 17 to generate corresponding angles of rotation, to adjust the attitude of the moving platform 13 to enable the attitude of the moving platform 13 to remain unchanged in the space. Certainly, data of the angles of rotation generated by the first motor 16 and the second motor 17 may also be fed back to the controller, to implement closed-loop control, thereby helping improve control precision.

The attitude sensor may include a gyroscope sensor, an acceleration sensor, and the like. A specific type of the attitude sensor is not limited in this application.

In addition, the attitude sensor may alternatively be arranged at another position in the electronic device.

For example, as shown in FIG. 13, an embodiment of this application further provides a reflector antenna. The reflector antenna may be fastened on a mounting pole 20. The reflector antenna includes a primary reflector 21, a secondary reflector 22, and a feed (not shown in FIG. 13). The secondary reflector 22 and the primary reflector 21 are arranged opposite to each other. The feed has a radiation port configured to transmit an electromagnetic wave. An electromagnetic wave transmitted by each radiation port may be reflected by the secondary reflector 22 to the primary reflector 21 and then propagated in space. The first motor and the second motor in the rotating assembly 10 may be fixedly connected to the primary reflector 21 through a connecting rod 40, and the secondary reflector 22 is fixedly connected to the moving platform in the rotating assembly 10.

The rotating assembly 10 provided in embodiments of this application may be used in the reflector antenna, and is configured to adjust a spatial attitude of the secondary reflector 22, to change a beam direction of the entire reflector antenna and implement a beam sweeping function. The attitude sensor 30 may be fastened on the primary reflector 21, and is configured to detect an attitude of the primary reflector 21. After the primary reflector 21 or the mounting pole 20 shakes slightly or has a position offset due to a strong wind, an earthquake, or the like, the attitude sensor 30 may generate a corresponding detection result, and the controller may adjust the spatial attitude of the secondary reflector 22 based on the detection result, to adjust a propagation direction of a beam to enable the propagation direction of the beam to be consistent with an original propagation direction.

The rotating assembly 10 provided in this application has a simple structure, and uses a small quantity of components. Therefore, it is convenient to implement a miniaturization design, and reduce a size of the rotating assembly. After the rotating assembly 10 is used in the reflector antenna, blocking on the electromagnetic wave can be reduced, and work efficiency of the reflector antenna can be assured.

It may be understood that, in another example, the attitude sensor 30 may alternatively be fastened on the secondary reflector 22, or may be fastened on the mounting pole 20. This is not limited in this application.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

"A plurality of" in this application refers to two or more than two. "And/or" describes an association relationship between associated objects and indicates that three relationships may exist. For example, A and/or B may indicate the following three cases: Only A exists, both A and B exist, and only B exists, where A and B each may be singular or plural.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A rotating assembly, comprising a first rotation mechanism, a second rotation mechanism, and a moving platform, wherein
the first rotation mechanism comprises a first rotating member and a first driven member, one end of the first driven member is rotatably connected to the first rotating member, and the other end is fixedly connected to the moving platform;
the first rotating member may rotate around a first axis, the first driven member may rotate around a second axis, and the first axis is perpendicular to the second axis;
the second rotation mechanism comprises a second rotating member and a second driven member, one end of the second driven member is rotatably connected to the second rotating member, and the other end is fixedly connected to the moving platform;
the second rotating member may rotate around a third axis, the second driven member may rotate around a fourth axis, the third axis is perpendicular to the fourth axis, and the third axis is perpendicular to the first axis; and
the second driven member and the moving platform may further rotate around a fifth axis, and the fifth axis is perpendicular to both the third axis and the fourth axis.

2. The rotating assembly according to claim 1, wherein the first rotation mechanism further comprises a first bearing assembly;
the first rotating member and the first driven member are rotatably connected through the first bearing assembly; and
a rotation center of the first bearing assembly coincides with the second axis.

3. The rotating assembly according to claim 2, wherein the first rotating member has a first axle hole, and a bearing in the first bearing assembly is fastened in the first axle hole.

4. The rotating assembly according to any one of claims 1 to 3, wherein the second rotation mechanism further comprises a second bearing assembly and a third bearing assembly; and
the second rotating member and the second driven member are rotatably connected through the second bearing assembly and the third bearing assembly, and the second bearing assembly and the third bearing assembly are arranged in a perpendicularly crossed manner.

5. The rotating assembly according to claim 4, wherein the second driven member has a second axle hole, and a bearing in the second bearing assembly is fastened in the second axle hole;
the second rotating member has a third axle hole, and a bearing in the third bearing assembly is fastened in the third axle hole; and
the second bearing assembly is connected to the third bearing assembly.

6. The rotating assembly according to claim 5, wherein the second bearing assembly comprises a first central axle, and the third bearing assembly comprises a second central axle;
the first central axle has a through hole, and an axis of the through hole is perpendicular to an axis of the first central axle; and
the second central axle penetrates the through hole.

7. The rotating assembly according to any one of claims 1 to 6, further comprising a first motor, wherein an output axle of the first motor is fixedly connected to the first rotating member, and an axis of the output axle of the first motor coincides with the first axis.

8. The rotating assembly according to any one of claims 1 to 7, further comprising a second motor, wherein an output axle of the second motor is fixedly connected to the second rotating member, and an axis of the output axle of the second motor coincides with the second axis.

9. An electronic device, comprising an attitude sensor, a controller, a first motor, a second motor, and the rotating assembly according to any one of claims 1 to 8, wherein
the first motor is configured to drive the first rotating member to rotate around the first axis, and the second motor is configured to drive the second rotating member to rotate around the second axis;
the attitude sensor is configured to detect an attitude of the moving platform in space; and
the controller is connected to the attitude sensor, the first motor, and the second motor, and is configured to control angles of rotation of the first motor and the second motor based on a detection result of the attitude sensor.

10. The electronic device according to claim 9, wherein the electronic device is a reflector antenna, and the reflector antenna comprises a primary reflector and a secondary reflector; and
the moving platform of the rotating assembly is fixedly connected to the secondary reflector.
